# EUROPEAN PATENT SPECIFICATION

(11) **EP 1 290 245 B1**
(45) Date of publication and mention of the grant of the patent: **11.04.2012**
(21) Application number: 01934054.6
(22) Date of filing: 15.05.2001
(51) Int. Cl.: C23F 11/00, C23F 15/00, C04B 41/00

(54) **METHOD FOR PROTECTING REINFORCEMENT IN CONCRETE FROM CHLORIDE CORROSION**
VERFAHREN ZUM SCHUTZ DER VERSTÄRKUNG AUS BETON GEGEN CHLORIDKORROSION
PROCEDE DESTINE A PROTEGER UN RENFORT DE BETON CONTRE LA CORROSION PAR LE CHLORURE

(30) Priority: 15.05.2000 FI 20001147
(43) Date of publication of application: 12.03.2003
(73) Proprietor: Custone OY, 00610 Helsinki (FI)
(72) Inventor: KUKKONEN, Pertti, FIN-00610 Helsinki (FI); MANNONEN, Risto, FIN-02210 Espoo (FI)
(74) Representative: Laitinen, Pauli Sakari
(86) International application number: PCT/FI2001/000470
(87) International publication number: WO 2001/088223

(56) References cited:
- C. TASHIRO ET AL.: 'Effect of CuO, TnO or PbO admixture on corrosion inhibition of iron in cement mortar mixed with sea water' FERROCEMENT CORROSION, PROCEEDINGS OF THE INTERNATIONAL CORRESPONDENCE SYMPOSIUM 1987, THAILAND, BANGKOK, pages 57 - 62, XP002905519
- RENGASWANY N.S. ET AL.: 'Studies on the effect of an inhibitor admixture in ferrocement' JOURNAL OF FERROCEMENT vol. 22, no. 4, October 1992, pages 359 - 360, XP002905518
- DATABASE WPI Week 198413, Derwent Publications Ltd., London, GB; AN 1984-079294, XP002905507 & JP 59 031 874 A (ITOY) 21 February 1984
- DATABASE WPI Week 199621, Derwent Publications Ltd., London, GB; AN 1996-206021, XP002905508 & JP 8 074 070 A (SUMOTIMO METAL IND LTD) 19 March 1996
- DATABASE WPI Week 198201, Derwent Publications Ltd., London, GB; AN 1982-00560E, XP002905509 & JP 56 152 944 A (KOKKO SEIKO KK) 26 November 1981
- DATABASE WPI Week 197938, Derwent Publications Ltd., London, GB; AN 1979-69157B, XP002905510 & JP 54 103 429 A (NIPPON STEEL CORP) 14 August 1979

## Description

The present invention relates to a method, by means of which reinforcement in concrete can be protected from so-called chloride corrosion.

The alkali environment of concrete protects the steel in reinforced concrete structures from corrosion. Corrosion can only start once the carbon dioxide in the air, in the presence of water and oxygen, neutralizes the alkali environment around the steel. Chlorides form an exception to the aforesaid phenomenon, because, in the presence of chlorides, steel corrosion may also start while there is still an alkali environment around the steel.

Indeed, the penetration of chlorides into concrete structures is, in many cases, one of the factors that essentially limits the life of reinforced concrete structures. The corrosion of the reinforcing steel causes not only a reduction in the cross-sectional area of the steel and thus a reduction in its load-bearing ability, but also causes spalling of the concrete cover around the steel, due to the large volume of the corrosion products compared to the volume of the original iron. At this stage, the life of a concrete structure can generally be reckoned to have ended.

The main attempts to limit the penetration of chlorides into concrete have been by making the concrete as dense as possible. Density has been improved by the use of silica and superplasticizers, for example. The effect obtained has been purely physical, i.e. it has been based on the diffusion of water and thus the chloride ions in the pores of the concrete. If it has been impossible to adequately limit the diffusion of chlorides in concrete designed for a saline environment, it has been necessary to resort, for example, to the use of expensive stainless or epoxy-coated steels. Harbour structures, oil-drilling rigs, and road bridges are some of the most typical structures that come in contact with chlorides.

Certain compounds arising in the hydration of cement are also able to bind chlorides to themselves chemically. The most important such chloride-binding compound is so-called Friedell salt, ((CaO)₃Al₂O₃CaCl₂*10H₂O).

Due to the creation of this salt, the penetration of a small amount of chloride, about 0.5 % of the quantity of cement, into the concrete generally poses no threat to fresh ordinary concretes. As the concrete ages, the situation changes. When the carbon dioxide in the air reacts with and neutralizes the products of hydration, the Friedell salt also decomposes releasing the chloride ions into the concrete, thus threatening the condition of the steel.

Up until now, no practicable means have been disclosed for preventing chlorides travelling into concrete, by binding them to form chemically stable compounds. The present invention discloses such a possibility.

The above and other advantages and benefits of this invention are achieved in the manner stated to be characteristic in the accompanying claims.

According to the invention, it has now been observed that, by adding metallic copper powder, even chloride coming from outside with seawater or antifreeze salt will react with the copper powder added to the concrete, to form with it compounds of extremely low solubility. Laboratory tests have confirmed the insolubility of the compounds that form.

Some possible reaction equations (1) and (2) are given for the reactions between chloride and metallic copper on the one hand and chloride and copper salt on the other:

2Cu + O₂ + 2H₂O + xCl⁻ → Cu₂(OH)₄₋ₓClₓ + xOH- (1)

2Cu²⁺ + 4OH- + xCl⁻ → Cu₂(OH)₄₋ₓClₓ + xOH⁻ (2)

The invention is surprising, because as copper is a nobler metal than iron it should not, according to the traditional conception, oxidize in concrete, but should be even better protected than iron from reacting. The present invention exploits the new information that metallic copper [powder ] is able, precisely in the presence of chloride, to form a stable compound, with which the chloride finally bonds.

A sufficiently small particle size of the copper powder ensures that the products arising from the reaction of the copper and chloride do not cause detrimental local expansion in the concrete.

The copper powder can be batched like any other fine aggregate, because the reactions of the metallic copper are slow and the copper powder has no chemical effect on the concrete mass or on the properties of the fresh concrete. The batching quantities can be decided in individual cases, i.e. batching can be as much as several tens of percent of the amount of cement.

The method has several applications, for example, when repairing a concrete structure into which chloride has already penetrated, it is possible to use a repair grout containing copper, which will bind to itself not only the new chloride penetrating the structure, but also the chloride that has also previously entered the structure.

## Claims

1. A method for protecting reinforcement in concrete from corrosion caused by chloride ions, **characterized in that**, during its manufacturing stage or at a later stage, metallic copper powder is brought into contact with the concrete mass to react with chlorides and to form salts with a chloride content and of low solubility.

2. A method according to claim 1, **characterized in that** the metallic copper powder is added to the concrete mass during its manufacturing stage.

3. A method according to claim 1, **characterized in that** the metallic copper powder is brought in to close contact with the concrete, in the form of a grout or similar material specifically intended for repair.

4. A method according to claim 1, **characterized in that** a sufficient amount of the metallic copper powder is added to achieve a long-term effect.

5. Use of metallic copper powder in grout for protecting of reinforcement steel from corrosion caused by chloride ions.

## Patentansprüche

1. Verfahren zum Schützen von Bewehrung in Beton vor Korrosion, die durch Chlorione verursacht wird, **dadurch gekennzeichnet, dass** während seines Fertigungsschritts oder in einer späteren Phase metallisches Kupferpulver in Kontakt mit der Betonmasse gebracht wird, um mit Chloriden zu reagieren und um Salze mit einem Chloridgehalt und einer niedrigen Löslichkeit zu bilden.

2. Verfahren nach Patentanspruch 1, **dadurch gekennzeichnet, dass** das metallische Kupferpulver während seiner Herstellungsphase zur Betonmasse zugesetzt wird.

3. Verfahren nach Patentanspruch 1, **dadurch gekennzeichnet, dass** das metallische Kupferpulver in nahen Kontakt mit dem Beton gebracht wird, der in Form von Mörtel oder ähnlichem Material vorliegt, das speziell zur Reparatur vorgesehen ist.

4. Verfahren nach Patentanspruch 1, **dadurch gekennzeichnet, dass** eine ausreichende Menge des metallischen Kupferpulvers zugesetzt wird, um eine Langzeitwirkung zu erzielen.

5. Verwendung von metallischem Kupferpulver in Mörtel zum Schützen von Bewehrungsstahl vor Korrosion, die durch Chlorione verursacht wird.

## Revendications

1. Procédé destiné à protéger un renfort de béton contre la corrosion par les ions de chlorure, **caractérisé en ce que**, pendant la phase de fabrication ou dans une phase ultérieure, une poudre de cuivre métallique est amenée en contact avec la masse du béton pour une réaction avec les chlorures et pour former des sels d'une contenance en chlorure et d'une faible solubilité.

2. Procédé selon la revendication 1, **caractérisé en ce que** la poudre de cuivre métallique est ajoutée à la masse de béton pendant la phase de la fabrication de celle-ci.

3. Procédé selon la revendication 1, **caractérisé en ce que** la poudre de cuivre métallique est amenée en contact étroit avec le béton, sous la forme d'un mastic ou d'un matériau similaire spécialement prévu pour réparation.

4. Procédé selon la revendication 1, **caractérisé en ce qu'**une quantité suffisante de poudre de cuivre métallique est ajoutée pour atteindre un effet à long terme.

5. Utilisation d'une poudre de cuivre métallique dans un mastic pour protéger un renfort en acier contre une corrosion par les ions de chlorure.
